# EUROPEAN PATENT SPECIFICATION

(11) **EP 1 659 890 B1**
(45) Date of publication and mention of the grant of the patent: **21.01.2009**
(21) Application number: 04775316.5
(22) Date of filing: 18.08.2004
(51) Int. Cl.: A42B 3/04, G02B 27/01, A62B 18/08

(54) **BREATHING MASK WITH DISPLAY DEVICE**
ATEMMASKE MIT ANZEIGEVORRICHTUNG
MASQUE RESPIRATOIRE AVEC DISPOSITIF D'AFFICHAGE

(30) Priority: 19.08.2003 SE 0302237
(43) Date of publication of application: 31.05.2006
(73) Proprietor: SAAB AB, 581 88 Linköping (SE)
(72) Inventor: MATTINSON, Fredrik, S-168 47 Bromma (SE); SVEDENKRANS, Göte, SE- 178 38 EKERÖ (SE)
(74) Representative: Norberg, Charlotte
(86) International application number: PCT/SE2004/001208
(87) International publication number: WO 2005/016046

(56) References cited:
- EP-A1- 0 622 030
- WO-A1-95/31909
- GB-A- 2 349 082

## Description

The present invention relates to a breathing mask suitable for wearing when working in a smoke-filled environment, comprising means for the provision of gas, means for the removal of exhaled air, a visor that allows a wearer of the breathing mask to view directly through the visor, means for fitting the breathing mask on the wearer, and an infrared camera, an optics unit with display and an electronics unit with power supply.

The infrared camera has proved to be a valuable aid for firemen working in a smoke-filled environment and replaces or supplements the eye when carrying out a search. For example, the infrared camera helps the fireman to be able to determine quickly whether or not there is a fire behind a closed door.

A breathing mask according to the first paragraph above is essentially already known through EP A1 0 622 030. In this, the optics unit and the infrared camera are mounted on the wearer's helmet. A similar mounting of the optics unit and the infrared camera is also known through WO 95/31909. It is common to the known optics units that they are located in a relatively unprotected position and that it is not possible to see through them so that the surroundings can be viewed directly. The lack of ability to see through the unit means that the wearer loses the three-dimensional perception of space which he has with normal sight, as only one eye can be used. In order to see the surroundings, the optics unit must be moved away and accordingly the wearer no longer has direct access to the infrared image and other information of interest such as temperature, pressure and duration of activity. It is thus not possible to obtain simultaneously a direct image and an infrared image for the same eye. As a result of the relatively unprotected location, the optics unit is exposed to soot and other dirt, and condensation can easily form.

Incorporating an optics unit into a helmet is already known through GB 2 349 082 A. In this case, the infrared camera has also been built into the helmet in a raised part of the upper part of the helmet. This design has proved to be unwieldy for several reasons. One reason is that it makes the helmet high, which means that while using the helmet the wearer is unbalanced. In addition, the location of the optics unit essentially above the wearer's eye line contributes to the instability. Particularly when the wearer, a fireman, needs to crawl and occasionally raise his head to check whether there is any danger, the instability has an obvious adverse effect on the wearer's ability to move and on his comfort.

The object of the present invention is to achieve a breathing mask that does not have the disadvantages described above that are associated with known designs. In addition, it is desirable for the breathing mask to be able to be used together with any standard helmets that have been tested for use when working in a smoke-filled environment. Another requirement is that it should be easy to modify any existing tested breathing masks and upgrade them with infrared function. The modification can essentially consist of making a small hole in the side of the visor to mount the optics unit and infrared camera. The advantage of this simple but functional modification is that a sooty or scratched visor can easily be replaced. The object of the invention is achieved by means of a breathing mask according to independent claim 1. the optics unit results in a relatively small imbalance, while at the same time the optics unit is given a protected location inside the visor. The circulation of air in the breathing mask protects the optics unit and the display against the formation of condensation.

Suitably, the optics unit is adjustable by means of an adjustment mechanism advantageously designed to allow sideways movement for adjusting the optics unit relative to the wearer's eyes, depending upon the distance between the eyes of the wearer. The adjustment mechanism is preferably also designed to allow movement in a vertical direction.

According to an advantageous embodiment, the display of the optics unit consists of an emissive micro display, so-called OLED (Organic Light Emitting Diodes). An advantage of an emissive OLED display is that it does not need any illuminating parts such as LCD displays and therefore requires much smaller drive electronics. The type of display also requires less power than LCD displays, so that a smaller battery can be used. Taken as a whole, therefore, the electronics unit and battery can be made considerably lighter.

The display of the optics unit can consist of a colour display. This means that the Iso-therm function of an infrared camera can be used during image generation in such a way that a particular temperature range, for example between approximately 30°C and 40°C is represented by a colour and is preferably red against an otherwise greyscale image. This makes it easier for a fireman to see people in a dark and smoke-filled environment. A suitable embodiment of the breathing mask is characterised in that the display of the optics unit consists of a colour display with reproduction in colour within a first temperature range corresponding to the body temperature of a human being and reproduction in greyscale outside this first range.

According to another advantageous embodiment, the infrared camera is arranged on the outside of the visor. In this way, many of the breathing masks available on the market can easily be supplemented with an infrared camera and this can be mounted together with the optics unit, possibly with a common hole through the visor.

According to yet another advantageous embodiment of the breathing mask, the optics unit comprises a semitransparent mirror arranged in the beam path between an outgoing lens comprised in the optics unit and an eye of the wearer of the breathing mask, in order to combine an image presented on the display and reflected in the semitransparent mirror with a direct image of the surroundings transmitted through the semitransparent mirror. This embodiment makes it possible for the wearer to see simultaneously with one eye a direct image of the surroundings and an infrared image of the same surroundings recorded by the infrared camera and presented by the display via the semitransparent mirror. The semitransparent mirror is suitably designed so that approximately 70% of the light from the display is reflected to the user. At the same time, approximately 30% of the light from the surroundings is allowed to be transmitted straight through the mirror to the user's eye, so that the user can see the surroundings with his normal vision.

High demands are made of the optics unit relating to compactness and performance in order for it to be able to be fitted into existing breathing masks. This includes requirements concerning eye relief and field of vision. Concerning field of vision, the image recorded should be at least 25° x 20°. The optics unit suitably comprises aspherical surfaces in order to achieve a good optical quality. In order to make the optics unit light, the lenses are preferably made of plastic. In addition, the optics unit is preferably designed with truncated optical elements in order to fit a landscape image from a preferably rectangular display.

The infrared camera advantageously comprises an infrared detector that detects radiation within 7-14 µm. The wavelength range utilized makes vision possible in a smoke-filled environment. In addition, the selection of the wavelength range means that infrared detectors without cooling can be used.

According to yet another advantageous embodiment, the electronics unit and the power supply are arranged externally, for example on the wearer's back together with requisite gas tubes. Such an arrangement means that there is less load on the wearer's head and is therefore often preferable.

For cleaning and replacing components, it is useful for the optics unit and infrared camera to be able to be released and removed from the visor easily. According to a suitable specific embodiment, the optics unit and the infrared camera are therefore designed to be attached to the visor of the breathing mask by means of bayonet fixings.

According to yet another advantageous embodiment, in addition to images from the infrared camera, the display is arranged to show other information, such as information about pressure, battery charge level, duration of activity and temperature. This can be carried out irrespective of whether the infrared camera is switched on or not. The display has thereby dual display tasks.

The infrared camera can advantageously be arranged to be adjustable between a normal position, an upward directed position and a downward directed position. In a downward directed position, the wearer can hold his head upright while at the same time he can see an infrared image of his feet, steps and the like. In the same way, in an upward directed position, the wearer can keep check on, for example, combustion gases at ceiling level or fires in roof joists. This is a great advantage for a heavily equipped fireman working in a smoke-filled environment who wants to be able to avoid raising and lowering his head.

According to an embodiment, the visor is designed to be flat in the field of vision where the optics unit opens towards the surroundings and curved in the field of vision of the eyes outside the optics unit. The curved design of the visor means that the wearer can see steps and the like in his normal vision when the infrared image does not need to be used but where the visible light is sufficient.

The invention will be described below in greater detail with reference to the attached drawings in which:
Figure 1 shows an example of a breathing mask according to the invention fitted on a wearer.
Figure 2 shows a schematic perspective view of an infrared camera that can be comprised in a breathing mask according to the invention.
Figure 3 shows a perspective view of an example of an optics unit suitable for inclusion in a breathing mask according to the invention.
Figure 4 illustrates schematically the beam path between the optics unit according to Figure 3 and a wearer's eye and the beam path direct from the surroundings to the wearer's eye.
Figure 5 shows schematically the operation of a display comprised in an optics unit, which optics unit is suitable for inclusion in a breathing mask according to the invention.

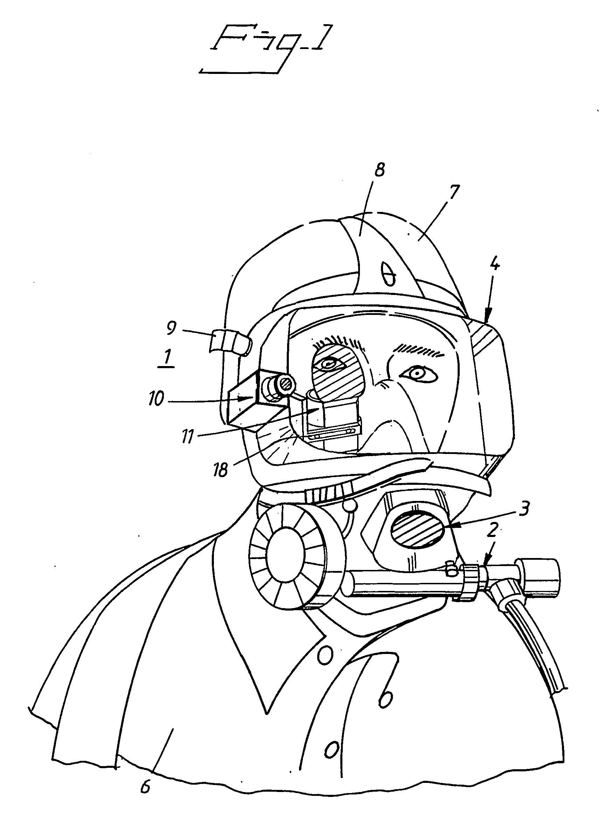

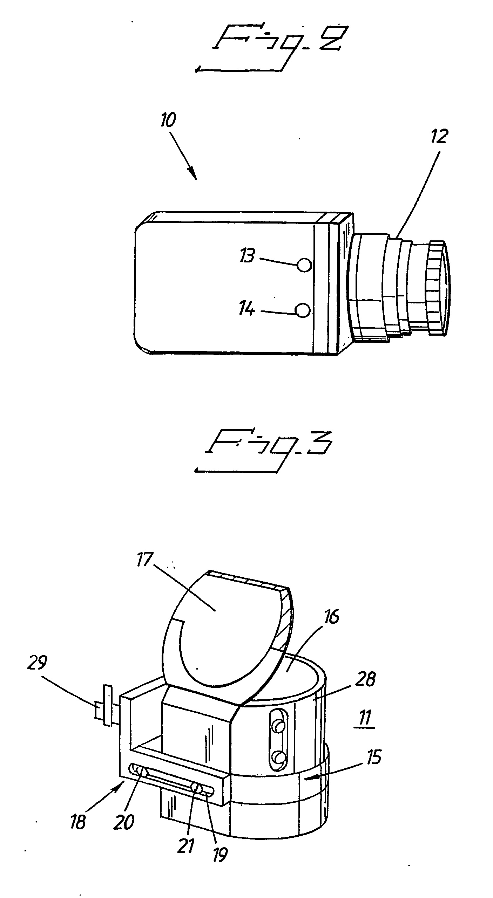

The breathing mask 1 shown in Figure 1 comprises means 2 for supplying oxygen and means 3 for the removal of exhaled air and a visor 4. The breathing mask 1 is held in place on the head 7 of the wearer 6 by means of adjustable straps 8, 9. An infrared camera 10 is mounted on one edge of the visor 4. An optics unit 11 is arranged on the inside of the visor 4 and is connected to the infrared camera 10. The optics unit will be described in greater detail with reference to Figure 3.

The infrared camera 10 shown in Figure 2 is of a compact type and has a lens 12 that is replaceable. The camera 10 is provided with fixing devices 13, 14 of a type not shown in greater detail for attaching it to the visor 4. According to a suitable embodiment, the camera can be attached by means of a connection of the bayonet type that is already known and is therefore not shown. By this means, the camera can easily be removed from the visor for cleaning, service, replacement, etc. The camera is arranged to be adjustable between three positions. In a first position, the basic position, the camera views straight ahead relative to the wearer. In a second position, the camera views downwards and in a third position it views upwards. In its basic position, when the camera views straight ahead, it is synchronized to minimize the parallax error between the field of vision of the eye and the field of vision of the camera.

The optics unit 11, which is shown in greater detail in Figure 3, comprises a display 15 housed in the lower part of the optics unit. An optics part 16 is arranged in front of the display 15 with ocular function and comprising one or several lenses (not shown) including an outgoing lens and a semitransparent mirror 17 in front of the optics part. Such a mirror transmits light to a certain extent and reflects light to a certain extent. For example, the mirror can reflect 70% of the light from the display and transmit 30% of the light from the surroundings. A suitable display is an emissive OLED display. Unlike LCD displays, this does not need any illuminating parts and hence smaller drive electronics in comparison to LCD displays. The emissive OLED display also requires less power, so that a smaller and lighter battery can be used. The semitransparent mirror is mounted in such a way that it can pivot outwards if it should happen to strike against the wearer's brow, for example if the wearer falls and dislodges the mask in some way. This can be achieved by spring-mounting the mirror in such a way that it can pivot around a shaft connected to a catch trigger that releases the catch in the event of a certain load.

The optics unit 11 is designed to be attached inside the visor 4 and can have bayonet fittings (not shown) for attaching it inside the visor. An adjustment mechanism 18 in the optics unit allows vertical and lateral adjustment of the optics unit 11. By moving the optics unit 11 in a track 19, the lateral position of the optics unit can be adjusted so that the semitransparent mirror of the optics unit is in a suitable lateral position in front of one eye of the wearer. It can be locked in a suitable position by turning two screws 20, 21.

The adjustment in a vertical direction can be fixed, that is the design has a fixed eye relief. A simple way of carrying out an adjustment in a vertical direction is to move the optics unit 11 up or down in the holder 28 on which the semitransparent mirror is attached. It is also possible to move the optics unit forward or backward in relation to the wearer. The adjustment mechanism for this can be at the side of the pin 29 for attaching the visor 4.

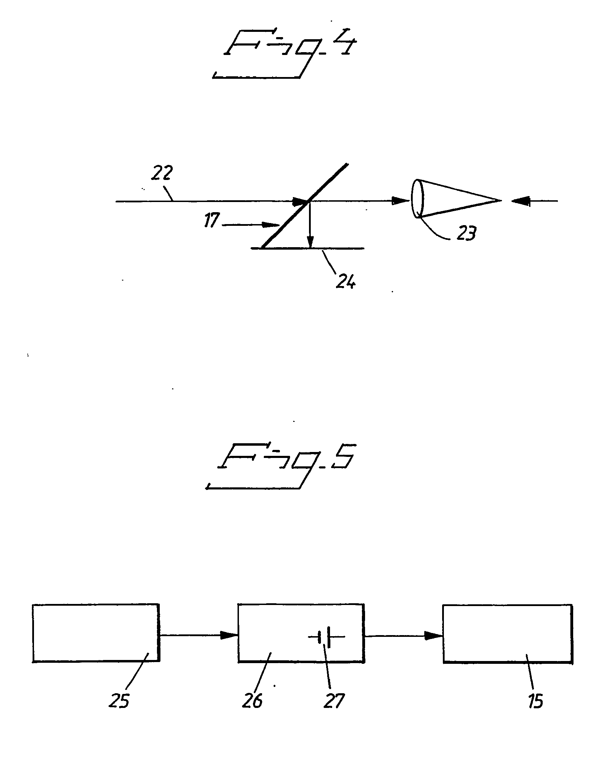

Figure 4 shows schematically the beam path. In this case, the distance from the mirror 17 to the eye 23 is eye relief. Light 22 from the surroundings is transmitted in the semitransparent mirror and then reaches the eye 23 of the wearer 6. The image from the display 15 is transmitted via the optics part 16, the outer lens 24 of which is shown in Figure 4, to the semitransparent mirror 17 where it is reflected to the eye 23 of the wearer 6.

Figure 5 shows schematically the operation and control of the display comprised in the optics unit. In the sensor block 25 shown, in addition to the infrared camera 10, there can be, for example, sensors for measuring pressure, battery charge level, quantity of air and temperature. An electronic unit 26 processes information from the sensors, for example in the form of video signals, into a suitable format for display on the display 15. The display 15 and the electronics in the electronic unit are provided with power from a battery 27 in the electronic unit. The electronics unit and battery are preferably designed to be mounted on the back of a wearer, together with other required equipment, such as air tubes.

The invention is not restricted to the embodiments shown in the above as examples, but can be modified within the framework of the following patent claims.

## Claims

1. Breathing mask (1) suitable for wearing when working in a smoke-filled environment, comprising means for the provision of gas (2), means for the removal of exhaled air (3), a visor (4) that allows a wearer (6) of the breathing mask to view directly through the visor, means (8, 9) for fitting the breathing mask on the wearer, and an infrared camera (10), an optics unit (11) with display (15) and an electronics unit (26) with power supply, **characterized in that** said optics unit (11) with display comprises a semitransparent mirror (17) and is arranged on the inside of the visor (4), in such way that the wearer (6) is simultaneously able to view the surroundings and an infrared image of the same surroundings.

2. Breathing mask according to Claim 1, **characterized in that** the optics unit (11) is adjustable by means of an adjustment mechanism (18) designed to allow sideways movement for adjustment of the optics unit (11) relative to the wearer's eyes depending upon the distance between the wearer's eyes.

3. Breathing mask according to any one of the preceding claims, **characterized in that** the adjustment mechanism (18) is designed to allow vertical movement.

4. Breathing mask according to any one of the preceding claims, **characterized in that** the optics unit's display (15) consists of an emissive microdisplay, a so-called OLED.

5. Breathing mask according to any one of the preceding claims, **characterized in that** the optics unit's display (15) consists of a colour display with reproduction in colour within a first temperature range corresponding to the body temperature of a human being and reproduction in greyscale outside this first range.

6. Breathing mask according to any one of the preceding claims, **characterized in that** said semitransparent mirror (17) is arranged in the beam path between an outgoing lens (16) comprised in the optics unit and the eye of a wearer of the breathing mask in order to combine an image presented by the display (15) and reflected in the semitransparent mirror (17) with a direct image of the environment transmitted through the semitransparent mirror.

7. Breathing mask according to Claim 6, **characterized in that** the semi-transparent mirror (17) is designed to transmit approximately 30% of the direct image through the mirror towards an eye of the wearer of the breathing mask and to reflect approximately 70% of the light from the image presented by the display towards the said eye of the wearer of the breathing mask.

8. Breathing mask according to any one of the preceding claims, **characterized in that** the optics unit (11) has a truncated design.

9. Breathing mask according to any one of the preceding claims, **characterized in that** the infrared camera (10) is arranged on the outside of the visor (4).

10. Breathing mask according to any one of the preceding claims, **characterized in that** the infrared camera (10) comprises an infrared detector that detects radiation within 7-14 µm.

11. Breathing mask according to any one of the preceding claims, **characterized in that** the optics unit (11) and the infrared camera (10) are designed to be attached inside the visor (4) of the breathing mask (1) by bayonet connections.

12. Breathing mask according to any one of the preceding claims, **characterized in that** the display (15) is arranged to show other information in addition to images from the infrared camera (10), such as information about pressure, battery charge level, period of activity and temperature.

13. Breathing mask according to any one of the preceding claims, **characterized in that** the infrared camera (10) is arranged to be able to be adjusted between a normal position, a upward-directed position and a downward-directed position.

14. Breathing mask according to any one of the preceding claims, **characterized in that** the visor (4) is flat in shape in the field of vision of the optics unit's (11) opening towards the environment and curved in shape in the field of vision of the eye outside the optics unit.

15. Breathing mask according to any one of the preceding claims, **characterized in that** the electronics unit (26) and the power supply are arranged externally, for example on the back of the wearer together with the requisite gas tubes.

16. Breathing mask according to any one of the preceding claims, **characterized in that** the gas provided in the breathing mask is arranged to prevent the formation of condensation on the optics unit (11) and on the display (15).

## Patentansprüche

1. Atemmaske (1), die für das Tragen beim Arbeiten in einer mit Rauch erfüllten Umgebung geeignet ist, umfassend, Mittel für das Bereitstellen von Gas (2), Mittel für das Entfernen von ausgeatmeter Luft (3), ein Visier (4), das dem Träger (6) der Atemmaske ermöglicht, direkt durch das Visier zu schauen, Mittel (8, 9) zum Befestigen der Maske an dem Träger und eine Infrarotkamera (10), eine optische Einheit (11) mit einem Display (15) und eine elektronische Einheit (26) mit einer Stromzufuhr,
**dadurch gekennzeichnet, dass** die optische Einheit (11) mit Display einen halbtransparenten Spiegel (17) umfasst und an der Innenseite des Visiers (4) angeordnet ist, auf eine solche Weise, dass der Träger (6) im Stande ist, gleichzeitig die Umgebungen und ein Infrarotbild derselben Umgebungen zu betrachten.

2. Atemmaske nach Anspruch 1, **dadurch gekennzeichnet, dass** die optisch Einheit (11) mittels eines Einstellmechanismus (18) einstellbar ist, der gestaltet ist, um eine seitliche Bewegung zum Einstellen der optischen Einheit (11) relativ zu den Augen des Trägers in Abhängigkeit des Abstands zwischen den Augen des Trägers einzustellen.

3. Atemmaske nach einem der vorhergehenden Ansprüche, **dadurch gekennzeichnet, dass** der Einstellmechanismus (18) gestaltet ist, um eine vertikale Bewegung zu ermöglichen.

4. Atemmaske nach einem der vorhergehenden Ansprüche, **dadurch gekennzeichnet, dass** das Display (15) der optischen Einheit aus einem ausstrahlenden Mikrodisplay, einem sog. OLED, besteht.

5. Atemmaske nach einem der vorhergehenden Ansprüche, **dadurch gekennzeichnet, dass** das Display (15) der optischen Einheit aus einem Farbdisplay mit einer Farbwiedergabe innerhalb eines ersten Temperaturbereichs, welcher der Körpertemperatur eines Menschen entspricht, und einer Graustufenwiedergabe außerhalb dieses ersten Bereichs besteht.

6. Atemmaske nach einem der vorhergehenden Ansprüche, **dadurch gekennzeichnet, dass** der halbtransparente Spiegel (17) in dem Strahlenweg zwischen einer Ausgangslinse (16), die in der optischen Einheit vorgesehen ist, und dem Auge eines Trägers der Atemmaske angeordnet ist, um ein Bild, das von dem Display (15) dargestellt und in dem halbtransparenten Spiegel (17) reflektiert wird, mit einem direkten Bild der Umgebung, das durch den halbtransparenten Spiegel übertragen wird, zu kombinieren.

7. Atemmaske nach Anspruch 6, **dadurch gekennzeichnet, dass** der halbtransparente Spiegel (17) gestaltet ist, um ungefähr 30% des direkten Bildes durch den Spiegel zu einem Auge des Trägers der Atemmaske zu übertragen und ungefähr 70% des Lichts von dem Bild, das von dem Display dargestellt wird, zum Auge des Trägers der Atemmaske zu reflektieren.

8. Atemmaske nach einem der vorhergehenden Ansprüche, **dadurch gekennzeichnet, dass** die optische Einheit (11) eine gestutzte Form aufweist.

9. Atemmaske nach einem der vorhergehenden Ansprüche, **dadurch gekennzeichnet, dass** die Infrarotkamera (10) an der Außenseite des Visiers (4) angeordnet ist.

10. Atemmaske nach einem der vorhergehenden Ansprüche, **dadurch gekennzeichnet, dass** die Infrarotkamera (10) einen Infrarotdetektor umfasst, der Strahlung innerhalb von 7-14 µm detektiert.

11. Atemmaske nach einem der vorhergehenden Ansprüche, **dadurch gekennzeichnet, dass** die optische Einheit (11) und die Infrarotkamera (10) gestaltet sind, um innerhalb des Visiers (4) der Atemmaske (1) mittels einer Bajonettverbindung angebracht zu sein.

12. Atemmaske nach einem der vorhergehenden Ansprüche, **dadurch gekennzeichnet, dass** das Display (15) vorgesehen ist, um andere Informationen zusätzlich zu den Bildern von der Infrarotkamera (10) anzuzeigen, wie beispielsweise Informationen über Druck, Ladungsniveau der Batterie, Zeitdauer der Aktivität und Temperatur.

13. Atemmaske nach einem der vorhergehenden Ansprüche, **dadurch gekennzeichnet, dass** die Infrarotkamera (10) vorgesehen ist, um im Stande zu sein, zwischen einer Normalposition, einer aufwärts gerichteten Position und einer abwärts gerichteten Position eingestellt zu sein.

14. Atemmaske nach einem der vorhergehenden Ansprüche, **dadurch gekennzeichnet, dass** das Visier (4) eine flache Form im Blickfeld der Öffnung, die sich zur Umgebung öffnet, der optischen Einheit (11) aufweist und eine gekrümmte Gestalt im Blickfeld des Auges außerhalb der optischen Einheit aufweist.

15. Atemmaske nach einem der vorhergehenden Ansprüche, **dadurch gekennzeichnet, dass** die elektronische Einheit (26) und die Spannungszufuhr extern angeordnet sind, beispielsweise auf dem Rücken des Trägers zusammen mit den erforderlichen Gasschläuchen.

16. Atemmaske nach einem der vorhergehenden Ansprüche, **dadurch gekennzeichnet, dass** das Gas, das in der Atemmaske vorgesehen ist, eingerichtet ist, um die Ausbildung von Kondensation auf der optischen Einheit (11) und auf dem Display (15) zu vermeiden.

## Revendications

1. Masque respiratoire (1) approprié pour être porté pour travailler dans un environnement rempli de fumée, comprenant des moyens de fourniture de gaz (2), des moyens de retrait d'air exhalé (3), une visière (4) qui permet à un porteur (6) du masque respiratoire de voir directement à travers la visière, des moyens (8, 9) pour ajuster le masque respiratoire sur le porteur, et une caméra infrarouge (10), une unité optique (11) avec un afficheur (15) et une unité électronique (26) avec une alimentation, **caractérisé en ce que** ladite unité optique (11) avec l'afficheur comprend un miroir semi-transparent (17) et est agencée sur l'intérieur de la visière (4), de manière à ce que le porteur (6) soit capable de voir simultanément les environs et une image infrarouge des mêmes environs.

2. Masque respiratoire selon la revendication 1, **caractérisé en ce que** l'unité optique (11) est ajustable au moyen d'un mécanisme d'ajustement (18) conçu pour permettre un mouvement de travers pour l'ajustement de l'unité optique (11) par rapport aux yeux du porteur en fonction de la distance entre les yeux du porteur.

3. Masque respiratoire selon l'une quelconque des revendications précédentes, **caractérisé en ce que** le mécanisme d'ajustement (18) est conçu pour permettre un mouvement vertical.

4. Masque respiratoire selon l'une quelconque des revendications précédentes, **caractérisé en ce que** l'afficheur (15) de l'unité optique consiste en un micro-afficheur à émission, appelé OLED.

5. Masque respiratoire selon l'une quelconque des revendications précédentes, **caractérisé en ce que** l'afficheur (15) de l'unité optique consiste en un afficheur couleur avec une reproduction en couleur dans une première plage de température correspondant à la température corporelle d'un être humain et une reproduction en échelle de gris en-dehors de cette première plage.

6. Masque respiratoire selon l'une quelconque des revendications précédentes, **caractérisé en ce que** ledit miroir semi-transparent (17) est agencé dans le trajet de faisceau entre une lentille de sortie (16) comprise dans l'unité optique et l'oeil d'un porteur du masque respiratoire afin de combiner une image présentée par l'afficheur (15) et réfléchie dans le miroir semi-transparent (17) avec une image directe de l'environnement transmise à travers le miroir semi-transparent.

7. Masque respiratoire selon la revendication 6, **caractérisé en ce que** le miroir semi-transparent (17) est conçu pour transmettre à peu près 30 % de l'image directe à travers le miroir vers un oeil du porteur du masque respiratoire et pour réfléchir à peu près 70 % de la lumière de l'image présentée par l'afficheur vers ledit oeil du porteur du masque respiratoire.

8. Masque respiratoire selon l'une quelconque des revendications précédentes, **caractérisé en ce que** l'unité optique (11) a une conception tronquée.

9. Masque respiratoire selon l'une quelconque des revendications précédentes, **caractérisé en ce que** la caméra infrarouge (10) est agencée sur l'extérieur de la visière (4).

10. Masque respiratoire selon l'une quelconque des revendications précédentes, **caractérisé en ce que** la caméra infrarouge (10) comprend un détecteur infrarouge qui détecte un rayonnement dans la plage de 7 à 14 µm.

11. Masque respiratoire selon l'une quelconque des revendications précédentes, **caractérisé en ce que** l'unité optique (11) et la caméra infrarouge (10) sont conçues pour être fixées à l'intérieur de la visière (4) du masque respiratoire (1) par des liaisons à baïonnette.

12. Masque respiratoire selon l'une quelconque des revendications précédentes, **caractérisé en ce que** l'afficheur (15) est agencé pour présenter d'autres informations en plus d'images provenant de la caméra infrarouge (10), telles que des informations concernant la pression, le niveau de charge de batterie, la période d'activité et la température.

13. Masque respiratoire selon l'une quelconque des revendications précédentes, **caractérisé en ce que** la caméra infrarouge (10) est agencée pour être capable d'être ajustée entre une position normale, une position dirigée vers le haut et une position dirigée vers le bas.

14. Masque respiratoire selon l'une quelconque des revendications précédentes, **caractérisé en ce que** la visière (4) a une forme plate dans le champ de vision de l'ouverture de l'unité optique (11) vers l'environnement et une forme incurvée dans le champ de vision de l'oeil à l'extérieur de l'unité optique.

15. Masque respiratoire selon l'une quelconque des revendications précédentes, **caractérisé en ce que** l'unité électronique (26) et l'alimentation sont agencées à l'extérieur, par exemple sur le dos du porteur avec les bouteilles de gaz requises.

16. Masque respiratoire selon l'une quelconque des revendications précédentes, **caractérisé en ce que** le gaz fourni dans le masque respiratoire est agencé pour empêcher la formation de condensation sur l'unité optique (11) et sur l'afficheur (15).
